# EUROPÄISCHE PATENTSCHRIFT

(11) **EP 0 936 765 B1**
(45) Veröffentlichungstag und Bekanntmachung des Hinweises auf die Patenterteilung: **04.01.2006**
(21) Anmeldenummer: 99440022.4
(22) Anmeldetag: 05.02.1999
(51) Int. Cl.: H04J 3/12, H04Q 3/00

(54) **Netzsteuerungseinrichtung und Verfahren zum Aufbau einer logischen Verbindung in einem digitalen synchronen Nachrichtenübertragungsnetz**
Network management device and method for setting up a logical link in a synchronous digital transmission system
Dispositif de commande de réseau et procédé d' établissement d'un lien logique dans un système de transmission numérique synchrone

(30) Priorität: 13.02.1998 DE 19805910
(43) Veröffentlichungstag der Anmeldung: 18.08.1999
(73) Patentinhaber: ALCATEL, 75008 Paris (FR)
(72) Erfinder: Sigloch, Rainer, 71686 Remseck (DE)
(74) Vertreter: Rausch, Gabriele

(56) Entgegenhaltungen:
- US-A- 5 359 596
- US-A- 5 629 938
- MATTHEWS R L ED - INSTITUTE OF ELECTRICAL AND ELECTRONICS ENGINEERS: "TRUNKS INTEGRATED RECORD KEEPING SYSTEM OPERATIONS SUPPORT FOR THE ISSN" INTERNATIONAL CONFERENCE ON COMMUNICATIONS. BOSTON, JUNE 19 - 22, 1983, NEW YORK, IEEE, US, Bd. PART 3, Juni 1983 (1983-06), Seiten 1267-1272,1, XP000845132
- LAZER M A ED - INSTITUTE OF ELECTRICAL AND ELECTRONICS ENGINEERS: "SWITCHED HIGH-SPEED SERVICE - ARCHITECTURE AND IMPACTS" ONE WORLD THROUGH COMMUNICATIONS. FLORENCE, MAY 4 - 8, 1992, PROCEEDINGS OF THE CONFERENCE ON COMPUTER COMMUNICATIONS (INFOCOM), NEW YORK, IEEE, US, Bd. VOL. 2 CONF. 11, 3. August 1992 (1992-08-03), Seiten 1004-1013, XP000300235 ISBN: 0-7803-0602-3
- PATENT ABSTRACTS OF JAPAN Bd. 1996, Nr. 09, 30. September 1996 (1996-09-30) -& JP 08 125654 A (NEC CORP), 17. Mai 1996 (1996-05-17) -& US 5 745 694 A (EGAWA TAKASHI ET AL) 28. April 1998 (1998-04-28)

## Beschreibung

Die Erfindung betrifft eine Netzsteuerungseinrichtung zum Aufbau einer logischen Verbindung in einem digitalen synchronen Nachrichtenübertragungsnetz nach dem Oberbegriff des Anspruchs 1 und ein Verfahren nach dem Oberbegriff des Anspruchs 8.

Bestehende digitale synchroneNachrichtenübertragungsnetze wie SDH- oder SONET-Netze (SDH: synchrone digitale Hierarchie, SONET: synchronous optical network) sind statische Netze, d.h. logische Verbindungen in dem Nachrichtenübertragungsnetz werden von einem Managementsystem mehr oder minder dauerhaft eingerichtet.

In dem Artikel "Netzplanung und -management", O. Gonález Soto et al, Elektrisches Nachrichtenwesen, Alcatel, Ausgabe 4/1993, Seiten 366-377 wird beschrieben, daß eine gewisse Flexibilität zur Abdeckung unerwarteter Nochfrageänderung in SDH-Netzen durch Bereitstellen einer gewissen Überversorgung erreicht wird. Durch Online-Managementprozesse kann diese Überversorgung kurzfristig, d.h. für den Zeitraum von einigen Tagen bis hin zu mehreren Monaten genutzt werden.

Das Einrichten von logischen Verbindungen in dem SDH-Netz erfolgt danach im Rahmen einer Netzplanung aufgrund von Vorhersagen des Bedarfs für einige Jahre. Zur Netzplanung wird das SDH-Netz in Teilnetze unterteilt, die getrennt voneinander optimiert werden. Die Optimierung erfolgt in zwei Verwaltungsschichten mittels eines Wegesuchverfahrens, welches die Kosten für einzelne Wege abschätzt und berücksichtigt.

Nach Abschluß der Netzplanung erzeugt der Online-Managementprozeß im dem Fall, daß die Kapazitätsgrenze bestehender Verbindung erreicht ist, auf der unteren Verwaltungsschicht eine Bereitstellungsanforderung. Wenn die Kapazität der unteren Verwaltungsschicht erschöpft ist, wird eine Bereitstellungsanforderung an den Prozeß zur Pfadeinrichtung der oberen Verwaltungsschicht gerichtet, wo sie automatisch oder durch das Betriebspersonal ausgeführt werden kann. Solche Bereitstellungsanforderungen sind auf die Teilnetze und auf die einzelnen Netzbetreiber beschränkt. Zudem können bei dieser Art der Anpassung nur Engpässe im Zeitraum von mehreren Tagen berücksichtigt werden. Häufigen kurzfristigeren Engpässen kann nur durch dauerhafte Bereitstellung zusätzlicher Übertragungskapazität begegnet werden, die aber dann über lange Zeitspannen bis auf die Zeiten der Engpässe ungenutzt bleibt.

Aus der US 5,629,938 ist ein Zugangsnetz vom Typ SONET mit digitalen Crossconnects bekannt, in dem auf Kundenanforderung von einem Steuerungsrechner automatisch feste, dedizierte Verbindungen eingerichtet werden. Die Kundenanforderung kann entweder über ein Auftragscenter manuell eingegeben werden oder der Kunde kann entsprechende Kommandos direkt elektronisch über dasselbe Zugangsnetz zu dem Steuerungsrechner übertragen. Letzteres erfordert Änderungen an den bestehenden Netzelementen und die Standardisierung eines entsprechenden Signalisierungsprotokolls.

Aufgabe der Erfindung ist es, eine Netzsteuerungseinrichtung und ein Verfahren zum Aufbau von logischen Verbindungen in einem digitalen synchronen Nachrichtenübertragungsnetz anzugeben, welche eine bessere Ausnutzung bestehender Übertragungskapazitäten erlauben und mit einfache Mitteln realisierbar sind.

Die Aufgabe wird hinsichtlich der Netzsteuerungseinrichtung gelöst durch die Merkmale des Anspruchs 1 und hinsichtlich des Verfahrens durch die Merkmale des Anspruchs 8. Vorteilhafte Ausgestaltungen sind den abhängigen Ansprüchen zu entnehmen.

Die Erfindung ist insbesondere zum Aufbau von Mietleitungen, sogenannten leased lines, vorteilhaft und geeignet. Neben der besseren Ausnutzung bestehender Übertragungskapazität besitzt die Erfindung die weiteren Vorteile, daß Nachrichtenübertragungsnetze flexibler an momentan

vorherrschende Nachfrage angepaßt werden können und daß Nachrichtenübertragungsnetze benutzerfreundlicher und besser an Benutzerbedürfnisse angepaßt sind.

Anspruch 6 beschreibt eine besonders vorteilhafte Weiterbildung der Erfindung, die es ermöglicht, daß von einem Kunden gewünschte Verbindungsparameter angegeben werden, wie Priorität, Bandbreite, gewünschter Zeitpunkt der Bereitstellung der angeforderten Verbindung, gewünschte Dauer der Bereitstellung der angeforderten Verbindung und/oder gewünschte Sicherheits- und Qualitätsmerkmale der angeforderten Verbindung. Dadurch eröffnen sich den Betreibern digitaler synchroner Nachrichtenübertragungsnetze oder -teilnetze neue Geschäftsfelder, indem die automatische Einrichtung zeitlich begrenzter Mietleitung (sogenannter leased lines) zu einem bestimmten Zeitpunkt mit vorgegebenen Merkmalen ermöglicht wird.

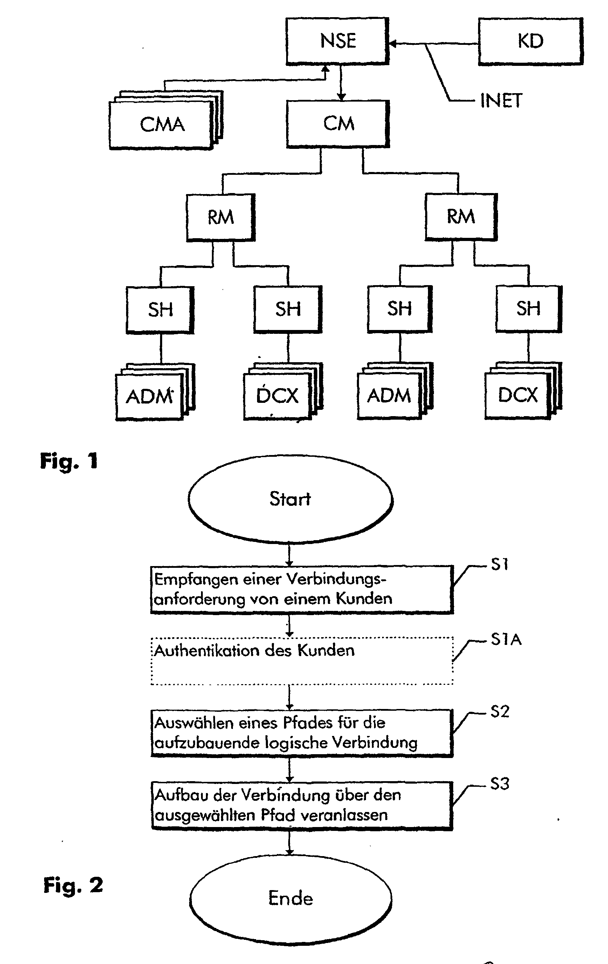

Im folgenden wird ein Ausführungsbeispiel der Erfindung anhand der Figuren 1 und 2 erläutert. Es zeigt:
- Figur 1: eine schematische Darstellung der Managementstruktur eines digitalen synchronen Nachrichtenübertragungsnetzes mit einer erfindungsgemäßen Netzsteuerungseinrichtung und
- Figur 2: ein Flußdiagramm des erfindungsgemäßen Verfahrens.

Ein Grundgedanke der Erfindung liegt darin, eine Netzsteuerungseinrichtung zu schaffen, die in der Lage ist, einzelne Verbindungsanforderungen zu empfangen, für eine solche Verbindungsanforderung einen Pfad durch das Nachrichtenübertragungsnetz auszuwählen und den Aufbau der angeforderten Verbindung über den ausgewählten Pfad zu veranlassen.

In der Figur 1 ist die hierarchische Struktur des Managements eines digitalen synchronen Nachrichtenübertragungsnetzes schematisch dargestellt. Ein Nachrichtenübertragungsnetz besteht aus verschiedenen Netzelementen wie Crossconnect-Systemen DXC und Add/Drop-Multiplexern ADM, die untereinander über physikalische Verbindungen wie Lichtwellenleiter oder Koax-Kobel zu einem Netz vermascht sind.

Für eine Anzahl gleicher Netzelemente eines Teilnetzes existiert jeweils eine Netzelement-Managementeinrichtung SH. Diese ist für die Steuerung und Überwachung netzelementspezifischer Funktionen, wie beispielsweise das Durchschalten einer Verbindung, zuständig, sowie für netzelementspezifische Meldungen und Alarme. Die Netzelement-Managementeinrichtungen eines Teilnetzes sind mit einer regionalen Managementeinrichtung, dem sogenannten Regionalmanager RM verbunden. Dieser steuert den Verbindungsaufbau, die Netzplanung und -optimierung in dem Teilnetz. Die Regionalmanager der Teilnetze sind mit einer übergeordneten Managementeinrichtung, dem sogenannten Country-Manager CM verbunden. Diese übergeordnete Managementeinrichtung CM verwaltet beispielsweise das Nachrichtenübertragungsnetz eines Landes oder eines Betreibers.

Erfindungsgemäß ist eine Netzsteuerungseinrichtung NSE zum Aufbau von logischen Verbindungen vorgesehen. Die Netuteverungseinrichtung NSE ist mit dem Country-Manager CM verbunden. Sie besitzt Zugangsmittel in Form einer Internet-Schnittstelle INET, über die ein Kunde KD eine Verbindungsanforderung an die Netzsteuerungseinrichtung senden kann. Die Verbindungsanforderung enthält den Auftrag, eine logische Verbindung innerhalb des Nachrichtenübertragungsnetzes aufzubauen, beispielsweise eine Mietleitung von Stuttgart nach London. Die Netzsteuerungseinrichtung wählt dann mittels eines Auswahlmittels einen für die aufzubauende logische Verbindung geeigneten Pfad aus, z.B. mittels eines Prozessors mit zugeordnetem Programmspeicher, in dem ein einen Auswahlalgorithmus abarbeitendes Auswahlprogromm gespeichert ist.

Die Auswahl des Pfades kann auf verschiedene Weisen erfolgen: Eine Möglichkeit besteht darin, daß die Netzsteuerungseinrichtung über einen Speicher verfügt, in dem Daten über die Struktur des Nachrichtenübertragungsnetzes abgelegt sind. Aus diesen Daten können die möglichen, d.h. die in dem Nachrichtenübertragungsnetz existierenden Pfade bestimmt werden. Über die Verbindung zu dem Country-Manager CM kann nun für jeden möglichen Pfad die aktuelle Auslastung erfragt werden, anhand der dann eine Auswahl des geeignetsten Pfades getroffen wird. Möglich ist es auch, für jeden möglichen Pfad unter Berücksichtigung der aktuellen Auslastung und beispielsweise der Länge des Pfades einen Kostenparameter zu bestimmen. Die Auswahl erfolgt dann dergestalt, daß die kostengünstigste Verbindung gewählt wird. Vorteilhaft sind die Daten über die Struktur des Nachrichtenübertragungsnetzes in dem Speicher in Form einer Routing-Tabelle gespeichert.

Eine andere Möglichkeit für die Auswahl des Pfades besteht darin, die Verbindungsanforderung in parametrisierter Form, z.B. in der Form Anfangs- und Endpunkt der Verbindung, an den Country-Manager weiterzuleiten, der dann mögliche Pfade ermittelt und diese als Ergebnis an die Netzsteuerungseinrichtung zurückgibt. Aus diesen möglichen Pfaden kann dann beispielsweise ebenfalls anhand eines Kostenparameters eine Auswahl des geeignetsten Pfades erfolgen.

Die Netzsteuerungseinrichtung NSE verfügt über Mittel zum Veranlassen des Verbindungsaufbaus der aufzubauenden logischen Verbindung über den ausgewählten Pfad. Dazu zählt eine Schnittstelleneinrichtung, die mit dem Country-Manager verbindbar ist. Dabei kann es sich beispielsweise um eine für Managementzwecke in SDH spezifizierte Q-Schnittstelle handeln (ITU-T G.773, März 1993). Über diese Schnittstelle werden Anweisungen an den Country-Manager gesendet, die aufzubauende logische Verbindung über den ausgewählten Pfad aufzubauen. Vorteilhafterweise besitzt die Netzsteuerungseinrichtung NSE zusätzlich auch Schnittstellen zu Country-Managern anderer Betreiber oder Länder. Dadurch wird ein grenzübergreifender Verbindungsaufbau unter Einbeziehung verschiedener Betreiber ermöglicht, indem über die zusätzlichen Schnittstellen Informationen über die Struktur und Auslastung angrenzender Nachrichtenübertragungsnetze abgefragt werden kann.

Gemäß einer vorteilhaften Weiterbildung der Erfindung sind die Zugangsmittel geeignet, neben der Verbindungsanforderung auch Authentikationsinformationen von einem Kunden zu empfangen, die eröglichen, die Identität des Auftraggebers eindeutig festzustellen und zu verifizieren. Dazu sind in der Netzsteuerungseinrichtung Mittel zum Prüfen der Authentikationsinformationen vorgesehen. Dadurch wird gewährleistet, daß nur zugelassene Kunden eine Verbindungsanforderung an die Netzsteuerungseinrichtung richten. Zudem wird eine automatische Abrechnung von für die Verbindung anfallenden Gebühren auf ein entsprechendes Kundenkonto ermöglicht. Die Authentikation kann beispielsweise mittels einer Chipkarte des Kunden erfolgen, auf der die Authentikationsinformationen und ein Schlüssel gespeichert sind.

In Figur 2 ist ein Flußdiagramm des erfindungsgemäßen Verfahrens gezeigt. Dabei werden folgende Schritte ausgeführt:
- Schritt S1:: Eine Verbindungsanforderung für eine logische Verbindung wird von einem Kunden über eine Internet-Hotline empfangen.
- Schritt S2:: Es werden alle möglichen Pfade in dem Nachrichtenübertragungsnetz bestimmt, die für den Aufbau der logischen Verbindung in Frage kämen und die über freie Kapazität verfügen. Aus den möglichen Pfaden wird einer für den Verbindungsaufbau ausgewählt. Vorzugsweise geschieht dies, indem für jeden möglichen Pfad ein Kostenparameter in Abhängigkeit der Länge, der Anzahl zwischengeschalter Netzelemente und der Auslastung der einzelen Pfadsegmente bestimmt wird und der kostengünstigste Pfad ausgewählt wird.
- Schritt S3:: Der Aufbau der logischen Verbindung über den ausgewählten Pfad wird veranlaßt, indem die Pfadparameter mit der Anweisung die logische Verbindung aufzubauen on den Country-Manager weitergeleitet werden. Der Verbindungsaufbau selbst wird dann von den Managementeinrichtungen mit Hilfe sogenannter "Managed Objecis" durchgeführt wie in dem Artikel von M. P. Bosse et al., "Management von SDH-Netzelementen: eine Anwendung der Informationsmodellierung" in Elektrisches Nachrichtenwesen Alcatel, Ausgabe 4/1993, Seiten 329 bis 338 angegeben.

Zwischen dem Schritt S1 und dem Schritt S2 kann vorteilhafterweise in einem weiteren Schritt S1A eine Authentikation des Kunden erfolgen. Dazu überträgt der Kunde verschlüsselte Authentikationsinformationen an die Netzsteuerungseinrichtung, die die Authentikationsinformationen dann überprüft, um so die Identität und Berechtigung des Kunden festzustellen und zu verifiziert. Die Authentikation kann beispielsweise mittels einer Chipkarte des Kunden erfolgen, auf der die Authentikationsinformationen und ein Schlüssel gespeichert sind.

Eine besonders vorteilhafte Weiterbildung der Erfindung ermöglicht, daß von einem Kunden gewünschte Verbindungsparameter angegeben werden, wie Priorität, Bandbreite, gewünschter Zeitpunkt der Bereitstellung der angeforderten Verbindung, gewünschte Dauer der Bereitstellung der angeforderten Verbindung und/oder gewünschte Sicherheits- und Qualitätsmerkmale der angeforderten Verbindung. Diese Verbindungsparameter werden von der Netzsteuerungseinrichtung beim Auswählen eines geeigneten Pfades berücksichtigt. Ist ein geeigneter Pfad gefunden, so sendet die Netzsteuerungseinrichtung ein Bestätigungssignal an den Kunden zurück, das die tatsächlichen Verbindungsparameter der aufzubauenden Verbindung enthält.

Die Netzsteuerungseinrichtung enthält einen Speicher, in dem Verbindungsanforderungen verschiedener Kunden bis zur Ausführung der jeweiligen Verbindungsanforderung gespeichert werden. Dies ist vorteilhaft, da bei der Pfadsuche auch andere derzeit offene, d.h. noch nicht erledigte, Verbindungsanforderungen berücksichtigt werden, die beispielsweise eine Verbindung für einen überschneidenden Zeitraum wünschen. Nachfolgend sind beispielhaft einige Verbindungsparameter aufgelistet, die ein Kunde angeben könnte:
- Hohe Priorität:
   - sofortiger Verbindungsaufbau oder spätestens in X Sekunden oder Minuten
   - Verbindungsaufbau für eine Dauer von X Stunden vom Zeitpunkt der Bestätigung an
- Mittlere Priorität:
   - Verbindungsaufbau innerhalb eines Tages auch während der Hauptgeschäftszeit (9.00 - 17.00)
   - Verbindungsaufbau während einer vorbestimmte Zeitspanne außerhalb der Hauptgeschäftszeit. Die Zeitspanne wird 12 Stunden im voraus bekanntgegeben.
- Niedrige Priorität:
   - Verbindungsaufbau irgendwann außerhalb der Hauptgeschäftszeit (nachts).

Die Netzsteuerungseinrichtung verfügt über Ausgabemittel, in Form einer Internetschnittstelle zum Kunden, mittels der ein Bestätigungssignal mit den tatsächlichen Verbindungsporametern an den Kunden gesendet wird. Diesem Bestötigungssignal kann der Kunde dann beispielsweise den tatsächlichen Zeitpunkt des Verbindungsaufbaus entnehmen. Vorteilhaft wird der Kostenparameter in Abhängigkeit der tatsächlichen Verbindungsparameter berechnet. Dieser Kostenparameter kann neben der Auswahl eines Pfades auch zur Vergebührung für den Kunden verwendet werden. Dadurch wird ermöglicht, daß die Netzsteuerungseinrichtung auch die Gebührenberechnung übernimmt. Den Betreibern digitaler synchroner Nachrichtenübertragungsnetze oder -teilnetze eröffnen sich neue Geschäftsfelder, indem die automatische Einrichtung zeitlich begrenzter Mietleitung (sogenannter leased lines) zu einem bestimmten Zeitpunkt mit vorgegebener Bandbreite und Sicherheitsmerkmalen ermöglicht wird. Außerdem wird die Flexibilität des Netzes für den Kunden erhöht, da dieser nun zeitlich befristete Verbindungen bestellen kann, was mit bisherigen Mietleitungen nicht möglich war.

## Patentansprüche

1. Netzsteuerungseinrichtung (NSE) zum Aufbau von logischen Verbindungen in einem digitalen synchronen Nachrichtenübertragungsnetz, wobei die Netzsteuerungseinrichtung (NSE)
- Zugangsmittel zum Empfangen einer Verbindungsanforderung für eine aufzubauende logische Verbindung,
- Auswahlmittel zum Auswählen eines Pfades für die aufzubauende logische Verbindung und
- Mittel zum Veranlassen des Aufbaus der aufzubauenden logischen Verbindung über den ausgewählten Pfad aufweist,
**dadurch gekennzeichnet, dass** die Zugangsmittel über das Internet mit dem Kunden verbindbar sind und die Verbindungsanforderung über das Internet übertragen wird.

2. Netzsteuerungseinrichtung nach Anspruch 1, bei der die Zugangsmittel dazu geeignet sind, die Verbindungsanforderung zusammen mit Authentikationsinformationen von einem Kunden zu empfangen und bei der Prüfmittel zum Überprüfen der Authentikationsinformationen vorgesehen sind.

3. Netzsteuerungseinrichtung nach Anspruch 1 mit einem Speicher zur Speicherung von Daten über die Struktur des Nachrichtenübertragungsnetzes.

4. Netzsteuerungseinrichtung nach Anspruch 1 mit einer Schnittstelle, die mit Managementeinrichtungen des Nachrichtenübertragungsnetzes verbindbar ist, zum Empfangen von Daten über die Struktur des Nachrichtenübertragungsnetzes und über die Auslastung in dem Nachrichtenübertragungsnetz bestehender Verbindungen.

5. Netzsteuerungseinrichtung nach Anspruch 1 mit Berechnungsmitteln zum Berechnen eines Kostenparameters für den ausgewählten Pfad und Ausgabemitteln zum Ausgeben des berechneten Kostenparameters.

6. Netzsteuerungseinrichtung nach Anspruch 1, bei der die Zugangsmittel geeignet sind, zusätzlich gewünschte Verbindungsparameter zu empfangen, die Informationen über Priorität, Bandbreite, gewünschten Zeitpunkt der Bereitstellung der angeforderten Verbindung, gewünschte Dauer der Bereitstellung der angeforderten Verbindung und/oder gewünschte Sicherheitsmerkmale der angeforderten Verbindung enthalten, bei der die Auswahlmittel den Pfad in Abhängigkeit der gewünschten Verbindungsparameter auswählen und bei der Ausgabemittel zum Ausgeben eines Bestätigungssignales vorgesehen sind, das tatsächliche Verbindungsparameter der über den ausgewählten Pfad aufzubauenden logischen Verbindung enthält.

7. Netzsteuerungseinrichtung nach Anspruch 5 und 6, bei dem die Berechnungsmittel den Kostenparameter in Abhängigkeit der tatsächlichen Verbindungsparameter berechnen.

8. Verfahren zum Aufbau von logischen Verbindungen in einem digitalen synchronen Nachrichtenübertragungsnetz, mit folgende Schritten :
- Empfangen einer Verbindungsanforderung für eine aufzubauende logische Verbindung mittels eines Zugangsmittels,
- Auswählen eines Pfades für die aufzubauende Verbindung mittels eines Auswahlmittels und
- Veranlassen des Aufbaus der aufzubauenden logischen Verbindung über den ausgewählten Pfad,
**dadurch gekennzeichnet, daß** das Zugangsmittel über das Internet mit dem Kunden verbunden wird und die Verbindungsanforderung über das Internet übertragen wird.

9. Verfahren nach Anspruch 8, bei dem die Verbindungsanforderung von einem Kunden empfangen wird und bei der eine Authentikation des Kundens mittels einer Chipkarte erfolgt.

## Claims

1. Network control device (NSE) for setting up logical connections in a digital synchronous communications network, wherein the network control device (NSE) comprises
- access means for receiving a connection request for a logical connection to be set up,
- selection means for selecting a path for the logical connection to be set up and
- means for initiating the setting-up of the logical connection to be set up via the selected path,
**characterized in that** the access means can be connected to the client via the Internet and the link request is transmitted via the Internet.

2. Network control device according to Claim 1, in which the access means are suitable for receiving the connection request together with authentication information items of a client and in which checking means are provided for checking the authentication information items.

3. Network control device according to Claim 1, having a memory for storing data relating to the structure of the communications network.

4. Network control device according to Claim 1, having an interface that can be linked to the management devices of the communications network for receiving data relating to the structure of the communications network and relating to the capacity utilization of connections existing in the communications network.

5. Network control device according to Claim 1, having calculating means for calculating a cost parameter for the selected path and output means for outputting the calculated cost parameter.

6. Network control device according to Claim 1, in which the access means are additionally suitable for receiving desired connection parameters that comprise information items relating to priority, bandwidth, desired point in time of the provision of the requested connection, desired duration of the provision of the requested connection and/or desired security features of the requested connection, in which the selection means select the path as a function of the desired connection parameters and in which the output means are provided for outputting a confirmation signal that comprises actual link parameters of the logical connection to be set up via the selected path.

7. Network control device according to Claims 5 and 6, in which the calculating means calculate the cost parameter as a function of the actual connection parameters.

8. Method of setting up logical connection in a digital synchronous communications network, comprising the following steps of:
- receiving a connection request for a logical connection to be set up by means of an access means,
- selecting a path for the connection to be set up by means of a selection means, and
- initiation of the setting up of the logical connection to be set up via the selected path,
**characterized in that** the selection means is connected to the client via the Internet and the connection request is transmitted via the Internet.

9. Method according to Claim 8, in which the connection request is received from a client and in which an authentication of the client takes place by means of a chip card.

## Revendications

1. Dispositif de commande de réseau (NSE) pour établir des liaisons logiques dans un réseau de transmission d'informations numérique synchrone, le dispositif de commande de réseau présentant
- des moyens d'accès pour recevoir une demande de liaison pour une liaison logique à établir,
- des moyens de sélection pour sélectionner un chemin pour la liaison logique à établir et
- des moyens pour ordonner l'établissement de la liaison logique à établir sur le chemin sélectionné,
**caractérisé en ce que** les moyens d'accès peuvent être reliés au client par le biais de l'Internet et la demande de liaison est transmise sur l'Internet.

2. Dispositif de commande de réseau selon la revendication 1, avec lequel les moyens d'accès sont conçus pour recevoir de la part d'un client la demande de liaison combinée avec des informations d'authentification et avec lequel sont prévus des moyens de contrôle pour contrôler les informations d'authentification.

3. Dispositif de commande de réseau selon la revendication 1, comprenant une mémoire pour enregistrer des données sur la structure du réseau de transmission d'informations.

4. Dispositif de commande de réseau selon la revendication 1, comprenant une interface qui peut être reliée à des dispositifs de gestion du réseau de transmission d'informations pour recevoir des données sur la structure du réseau de transmission d'informations et sur la charge des liaisons existantes dans le réseau de transmission d'informations.

5. Dispositif de commande de réseau selon la revendication 1, comprenant des moyens de calcul pour calculer un paramètre de coût pour le chemin sélectionné et des moyens de sortie pour émettre le paramètre de coût calculé.

6. Dispositif de commande de réseau selon la revendication 1, avec lequel les moyens d'accès sont conçus pour recevoir en plus des paramètres souhaités de la liaison, lesquels contiennent des informations sur la priorité, la bande passante, le moment souhaité de la mise à disposition de la liaison demandée, la durée souhaitée de la mise à disposition de la liaison demandée et/ou les caractéristiques de sécurité souhaitées de la liaison demandée, avec lequel les moyens de sélection sélectionnent le chemin en fonction des paramètres souhaités de la liaison et avec lequel sont prévus des moyens de sortie pour émettre un signal de confirmation qui contient les paramètres de liaison réels de la liaison logique à établir sur le chemin sélectionné.

7. Dispositif de commande de réseau selon la revendication 5 et 6, avec lequel les moyens de calcul calculent le paramètre de coût en fonction des paramètres réels de la liaison.

8. Procédé pour établir des liaisons logiques dans un réseau de transmission d'informations numérique synchrone, comprenant les étapes suivantes :
- Réception d'une demande de liaison pour une liaison logique à établir à l'aide d'un moyen d'accès,
- Sélection d'un chemin pour la liaison logique à établir au à l'aide d'un moyen de sélection et
- Ordre d'établissement de la liaison logique à établir sur le chemin sélectionné,
**caractérisé en ce que** les moyens d'accès sont reliés au client par le biais de l'Internet et la demande de liaison est transmise sur l'Internet.

9. Procédé selon la revendication 8, avec lequel la demande de liaison d'un client est reçue et avec lequel a lieu une authentification du client au moyen d'une carte à puce.
